# FASCICULE DE BREVET EUROPEEN

(11) **EP 3 488 139 B1**
(45) Date de publication et mention de la délivrance du brevet: **31.08.2022**
(21) Numéro de dépôt: 17748544.8
(22) Date de dépôt: 13.07.2017
(51) Int. Cl.: F17C 6/00

(54) **MODULE ET SYSTEME DE DEPRESSURISATION D'UN RESERVOIR CRYOGENIQUE.**
MODUL UND SYSTEM ZUR DRUCKENTLASTUNG EINES KRYOGENEN TANKS
MODULE AND SYSTEM FOR DEPRESSURISING A CRYOGENIC TANK

(30) Priorité: 21.07.2016 FR 1656975
(43) Date de publication de la demande: 29.05.2019
(73) Titulaire: Engie, 92400 Courbevoie (FR)
(72) Inventeur: LIEGEOIS, Philippe, 78600 Maisons-Laffitte (FR); ZELLOUF, Yacine, 92600 Asnieres Sur Seine (FR); OSMAN, Karim, 92220 Bagneux (FR); GUEDACHA, Hicham, 92430 Marnes La Coquette (FR); SUBREVILLE, Patrick, 27190 Ferrieres Haut Clocher (FR)
(74) Mandataire: Novagraaf Technologies
(86) Numéro de dépôt international: PCT/FR2017/051930
(87) Numéro de publication internationale: WO 2018/015640

(56) Documents cités:
- EP-A1- 2 363 629
- EP-A1- 3 026 323
- DE-A1-102004 050 419
- DE-A1-102012 024 717
- DE-A1-102013 018 334
- FR-A1- 2 766 165
- FR-A1- 2 900 399
- US-A1- 2009 142 637
- US-A1- 2009 200 318

## Description

L'invention se rapporte à un module pour la dépressurisation, la collecte et le stockage d'une portion de couche gazeuse provenant d'un ou de plusieurs réservoirs cryogéniques. L'invention a également pour objet un système mettant en œuvre un tel module. EP3026323 Al divulgue un système de collecte de boil-off.

Par source gazeuse d'énergie, on entend au sens de la présente invention, tout gaz obtenu à partir de sources d'énergies gazeuses comme l'hydrogène, le gaz naturel, le bio-méthane, etc.

Actuellement, les pays industrialisés s'efforcent de mettre en place des infrastructures fonctionnant à partir de sources gazeuses d'énergie en raison de l'augmentation de la demande en énergie.

Par ailleurs, ces efforts pour la mise en place d'infrastructures fonctionnant à partir de telles sources ont également pour but de réduire la dépendance des pays industrialisés au pétrole.

Ainsi, la consommation en source gazeuse d'énergie tend actuellement à augmenter. Cette augmentation est, en particulier, due au fait que la combustion de ces sources gazeuses d'énergies est bien moins polluante que l'équivalent en charbon ou en fuel lourd. Elles sont donc des choix idéaux pour une production énergétique plus respectueuse de l'environnement.

En particulier, les sources gazeuses d'énergie, sous forme liquéfiée (par exemple le gaz naturel liquéfié ou GNL), sont notamment de plus en plus utilisées en tant que carburant pour véhicules. Donc, pour satisfaire au mieux la demande, les chaînes gazières se densifient et se développent rapidement multipliant les échanges de gaz entre producteurs, transporteurs, distributeurs et fournisseurs. Toutefois, les sources gazeuses d'énergie étant des produits évolutifs dans le temps, leurs évaporations dans l'atmosphère se multiplient également au gré de ces échanges. Or, il se trouve que la question de la gestion de ces évaporations de GNL est restée en second plan jusqu'à ce jour. Le développement massif de ces chaînes gazières va rendre cette situation de plus en plus délicate d'un point de vue environnemental et de sécurité. En effet, ces rejets de gaz dans l'atmosphère doivent être minimisés d'un point de vue environnemental et de sécurité.

En ce qui concerne plus particulièrement l'utilisation de sources gazeuses d'énergie sous forme liquéfiée en tant que carburant pour véhicules, il arrive que ceux-ci, pendant leur service, stationnent sur des parkings (par exemples des aires de repos au bord des routes ou des autoroutes) ou sont remisés dans leur dépôt de flotte captive. Lors de ces phases de stationnement ou de remisage, les véhicules sont à l'arrêt dans un milieu se trouvant à température ambiante (typiquement entre 10°C et 25°C dans les pays occidentaux), ce qui occasionne une montée en pression de la phase gazeuse à l'intérieur du réservoir, qui est induite par l'évaporation de la source gazeuse d'énergie sous forme liquéfiée (par exemple le GNL) occasionnée par les entrées de chaleur.

Afin de préserver l'intégrité du réservoir, celui-ci est usuellement équipé d'une soupape de sécurité qui s'ouvre en libérant le gaz en surpression à l'atmosphère.

Ces différentes situations impliquent évidemment plusieurs inconvénients majeurs :
- le rejet d'un gaz à effet de serre dans l'atmosphère,
- le risque de présence d'atmosphère explosive autour des véhicules remisés, risque actuellement non traité sauf à mettre en place des procédures très lourdes et coûteuses non adaptées à un développement massif de la filière.

Par ailleurs, lorsqu'un véhicule roulant au gaz naturel liquéfié (GNL) se trouve dans une station GNL en situation de remplissage d'un ou de plusieurs réservoirs, il est possible d'éviter le dégazage et de récupérer le volume gazeux expulsé hors du réservoir en dépressurisant le réservoir dans des conditions optimales. Mais si le véhicule n'est pas en situation de remplissage, la seule solution actuellement existante pour éviter le dégazage consiste à purger, ou expulser ces gaz dans l'atmosphère, par la soupape de sécurité, ceci afin de maintenir les gaz internes du réservoir à une pression inférieure à la pression opératoire maximale dans le but de ne pas altérer l'intégrité du réservoir. Ainsi, dans les différentes solutions existantes, pour éviter tout rejet de phases gazeuses de carburant dans l'atmosphère :
- soit il est nécessaire de se trouver dans une station et de plus en situation de remplissage pour éviter le dégazage,
- soit la soupape s'ouvre pour dégazer directement dans l'atmosphère dans le but de préserver l'intégrité du réservoir, avec les conséquences évoquées plus haut.

Pour résoudre les défauts et inconvénients précités, le déposant a mis au point un module de dépressurisation et de stockage d'une portion de couche gazeuse provenant d'un réservoir cryogénique, qui permet à la fois de collecter l'excès de gaz et de le valoriser en fonction des usages futurs.

Plus particulièrement, la présente invention a donc pour objet un module pour la dépressurisation, la collecte et le stockage d'une portion de couche gazeuse provenant d'au moins un réservoir cryogénique de véhicule, ledit réservoir cryogénique comprenant au moins une soupape, ladite couche gazeuse étant la phase gazeuse d'une source gazeuse d'énergie, ledit réservoir cryogénique contenant, outre ladite couche gazeuse, une couche liquide qui est la phase liquide d'une source gazeuse d'énergie,

ledit module étant caractérisé en ce qu'il constitue un ensemble étanche comprenant :
- une entrée E destinée à être reliée, par un conduit amovible d'entrée, à au moins un orifice dudit réservoir pour l'évacuation, hors dudit réservoir (100) cryogénique, d'une portion de couche gazeuse, ledit orifice étant ou non muni d'une soupape,
- une sortie S destinée à être reliée, par un conduit amovible de sortie, à un système extérieur apte à utiliser ladite portion de couche gazeuse une fois évacuée,
- un réchauffeur raccordé à ladite entrée E du module,
- un réservoir tampon amortisseur, raccordé au réchauffeur, et aussi à
- un compresseur, raccordé audit réservoir tampon, et aussi à
- un moyen de stockage raccordé à ladite sortie dudit module, ledit moyen de stockage permettant de stocker ladite portion de couche gazeuse évacuée.

Le module selon l'invention permet la dépressurisation, la collecte et le stockage d'une portion de couche gazeuse provenant d'au moins un réservoir cryogénique de véhicule, étant entendu qu'un véhicule peut contenir plusieurs réservoirs cryogéniques (en général deux pour des véhicules terrestres de type camion).

Par véhicule, on entend au sens de la présente invention, un véhicule terrestre, maritime ou aérien comprenant au moins un réservoir cryogénique.

Par réservoir cryogénique, on entend au sens de la présente invention, tout réservoir facilement utilisable par un opérateur ne possédant pas de formation poussée sur sa manipulation et son contenu, le réservoir étant en outre adapté pour stocker du liquide et/ou du gaz à une température inférieure ou égale à - 60°C et à une pression absolue supérieure ou égale à 1 bar.

Par module de dépressurisation, on entend, au sens de la présente invention, un module pour la dépressurisation d'au moins un réservoir cryogénique.

Par module, on entend, au sens de la présente invention, un module fonctionnellement autoporteur et transportable, par exemple sur une plateforme transportable de type véhicule utilitaire, dont tous les éléments qui le composent peuvent être contenus dans un volume d'au plus 16 m³, c'est-à-dire un volume défini par une largeur d'au plus deux mètres, une longueur d'au plus quatre mètres et une hauteur d'au plus deux mètres.

Par module constituant un ensemble étanche, on entend, au sens de la présente invention, un module pour lequel il n'y a aucune émission de gaz.

Par réservoir tampon amortisseur, on entend, au sens de la présente invention, un réservoir permettant de réguler la circulation du gaz à l'intérieur du module selon l'invention, ledit réservoir tampon amortisseur opérant à une pression équivalente à celle de la phase gazeuse du réservoir cryogénique.

De manière avantageuse, le module selon l'invention comprend en outre un réchauffeur situé en amont dudit réservoir tampon, pour éviter de détériorer les différents composants du module lorsque la portion de couche gazeuse évacuée arrive dans le module : le réchauffement permet d'éviter qu'elle n'arrive à une température cryogénique dans le réservoir tampon.

Le compresseur, qui est raccordé au réservoir tampon et au moyen de stockage, se met en fonctionnement dans une plage de pressions prédéfinie, entre une valeur minimale et une valeur maximale de pressions de consigne à l'intérieur du réservoir tampon. Un tel mécanisme de fonctionnement est bien connu de l'état de l'art. La consigne de pression maximale est calée sur le dispositif aval d'exploitation, tel qu'un réseau de transport et/ou de distribution de gaz, ou un système mixte de cogénération de chaleur et d'électricité, ou un système de production d'électricité, ou à un système de distribution de gaz naturel véhicule GNV.

De manière avantageuse, le moyen de stockage a la capacité de stocker à haute pression (par exemple à 300 bar) la portion de couche gazeuse évacuée hors du réservoir cryogénique.

De manière avantageuse, le module peut en outre comprendre un odoriseur adapté pour odoriser la phase gazeuse, cet odoriseur étant situé entre le réservoir tampon amortisseur et le compresseur, dans un but d'exploitation en aval. Par ailleurs, l'odoriseur permet aussi de détecter toute fuite de gaz dans l'environnement et éviter tout danger pour les utilisateurs de ce module.

De manière avantageuse, le module selon l'invention peut en outre comprendre une sortie annexe raccordée à la sortie dudit compresseur.

La présente invention a également pour objet un système pour la dépressurisation, la collecte et le stockage d'une portion de couche gazeuse provenant d'au moins un réservoir cryogénique de véhicule comprenant au moins une soupape, ladite couche gazeuse étant la phase gazeuse d'une source gazeuse d'énergie, ledit réservoir cryogénique contenant, outre ladite couche gazeuse, une couche liquide qui est la phase liquide d'une source gazeuse d'énergie, ledit système étant caractérisé en ce qu'il comprend :
- ledit module selon l'invention ;
- un conduit amovible principal d'entrée pour le transport de ladite portion de couche gazeuse provenant dudit réservoir cryogénique, entre au moins un orifice dudit réservoir et l'entrée dudit module, ledit orifice étant ou non muni d'une soupape,
- au moins un dispositif de connexion pour connecter ledit orifice d'évacuation du réservoir avec ledit conduit amovible d'entrée, ledit dispositif de connexion étant étanche et cryogénique, et
- un conduit amovible de sortie pour le transport de ladite portion de couche gazeuse stockée dans ledit moyen de stockage, entre la sortie (S) dudit module et un système extérieur apte à stocker et/ou utiliser ladite portion de couche gazeuse stockée.

De préférence, le conduit amovible de sortie est adapté pour être raccordée à un dispositif aval d'exploitation, par exemple un réseau de transport et/ou de distribution de gaz, un système mixte de cogénération de chaleur et d'électricité, un système de production d'électricité, ou un système de distribution de gaz naturel véhicule (usuellement désigné par l'acronyme GNV).

De manière avantageuse, le conduit d'entrée et/ou celui de sortie peuvent être flexibles.

Le lecteur comprendra également à la lecture de ce qui précède que, de manière avantageuse, le conduit amovible principal d'entrée peut comporter un collecteur muni d'une pluralité de dispositifs de connexion, de manière à pouvoir être connecté à une pluralité de réservoirs cryogéniques.

Selon un premier mode de réalisation particulièrement avantageux du système selon l'invention, le conduit amovible principal d'entrée peut être un conduit permettant la dépressurisation contrôlée d'un ou plusieurs réservoirs cryogéniques : à cette fin, ce conduit pourra comprendre un moyen pour maintenir ou réduire de la pression interne dudit réservoir cryogénique à une valeur égale ou inférieure à une valeur prédéterminée. Par exemple, lorsqu'un véhicule muni d'un réservoir cryogénique arrive à une installation contenant le module selon l'invention, un opérateur connecte l'orifice du réservoir au module via le conduit amovible, dans le but si nécessaire de réduire la pression dans le réservoir cryogénique, ceci jusqu'à une valeur déterminée requise pour un fonctionnement d'une durée donnée sans ouverture de la soupape du réservoir cryogénique.

Dans ce cas, on peut utiliser le système selon l'invention en mode actif, c'est à dire pour maintenir ou réduire (dépressurisation contrôlée) la pression interne du réservoir cryogénique à une valeur inférieure à une valeur prédéterminée.

Selon un deuxième mode de réalisation particulièrement avantageux de l'invention, le conduit amovible principal d'entrée peut être connecté à un ou plusieurs réservoirs cryogéniques via l'orifice d'évacuation. Le conduit amovible devra alors être muni d'un clapet, celui-ci devant être taré pour se déclencher à une pression déterminée correspondant à la pression du réservoir cryogénique, et en-dessous de la pression d'ouverture de la soupape du réservoir cryogénique.

Dans ce cas, on peut utiliser le système selon l'invention en mode passif, c'est-à-dire en se contentant de récupérer la portion de phase gazeuse s'échappant de la soupape dont est muni l'orifice d'évacuation.

D'autres avantages et particularités de la présente invention résulteront de la description qui va suivre, donnée à titre d'exemple non limitatif et faite en référence aux figures annexées :
- les figures 1 à 3 représentent chacune un schéma de principe général d'un exemple de réalisation du système selon l'invention pouvant être utilisés en mode actif ;
- les figures 4 à 6 représentent chacune un schéma de principe général d'un exemple de réalisation du système selon l'invention pouvant être utilisés en mode passif.

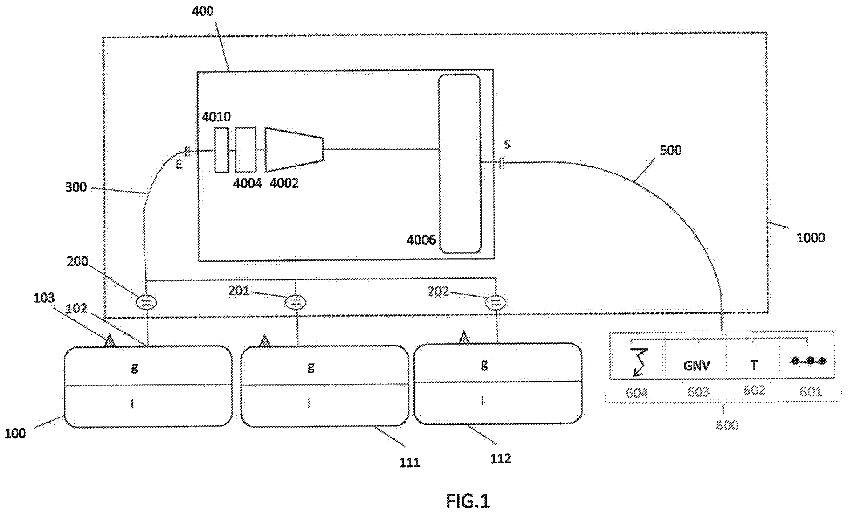

Les éléments identiques représentés sur les figures 1 à 6 sont identifiés par des références numériques identiques.

Les figures 1 à 3 représentent chacune un schéma de principe général d'un exemple de réalisation du système selon l'invention pouvant uniquement être utilisés en mode actif.

Plus particulièrement, la figure 1 représente un système pour la dépressurisation, la collecte et le stockage selon l'invention comprenant un module de dépressurisation et de stockage 400 selon l'invention.

Le module de dépressurisation et de stockage 400 illustré sur la figure 1 comprend :
- une entrée E destinée à être reliée, par un conduit amovible d'entrée 300, à un orifice 102 (non muni de clapet dans ces modes de réalisation) de plusieurs réservoirs cryogéniques 100, 111, 112, pour l'évacuation, hors de ces réservoirs, d'une portion de couche gazeuse,
- une sortie S destinée à être reliée, par un conduit amovible de sortie 500, à un système extérieur apte à utiliser ladite portion de couche gazeuse une fois évacuée;
- un réchauffeur 4010 raccordé à ladite entrée E du module 400,
- un réservoir tampon amortisseur 4004, raccordé au réchauffeur 4010, et aussi à un compresseur 4002, raccordé audit réservoir tampon 4004, et aussi à
- un moyen de stockage 4006 raccordé à la sortie S pour stocker la portion de couche gazeuse évacuée.

Le système de dépressurisation, de collecte et de stockage selon l'invention comprend en outre :
- un conduit amovible principal d'entrée 300 pour le transport de la portion de couche gazeuse provenant de trois réservoirs cryogéniques 100, 111, 112, le conduit 300 étant connecté à
- un collecteur muni d'une pluralité de dispositifs de connexion 200, 201, 202 (par exemple au nombre de trois),
- chacun des dispositifs de connexion 200, 201, 202 étant connecté à chacun des orifices d'évacuation 102 des réservoirs cryogéniques 100, 111, 112, ces dispositifs de connexion étant étanches et cryogéniques,
- un conduit amovible de sortie 500 pour le transport de la portion de couche gazeuse stockée dans le moyen de stockage 4008, entre la sortie S du module 400 et un système extérieur 600 apte à stocker et/ou utiliser ladite portion de couche gazeuse stockée.

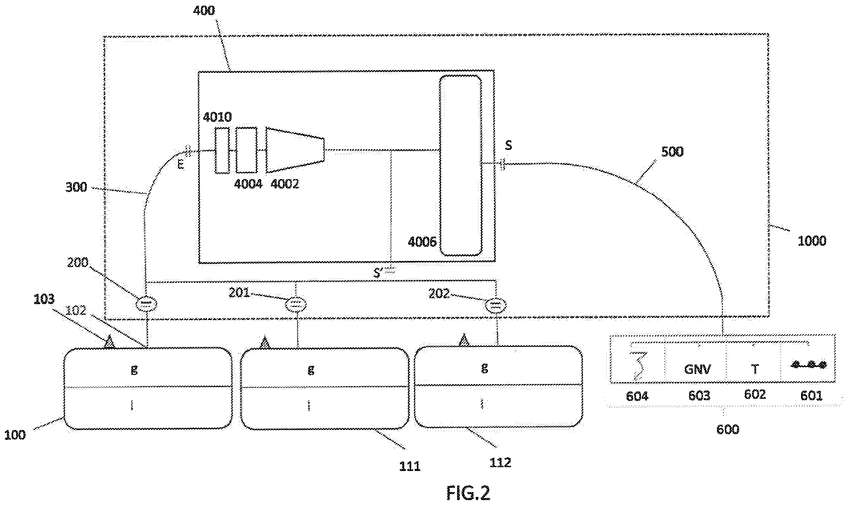

La figure 2 se différencie de la figure 1 par la présence d'une sortie annexe S'à la sortie du compresseur 4002 dans le module 400 selon l'invention.

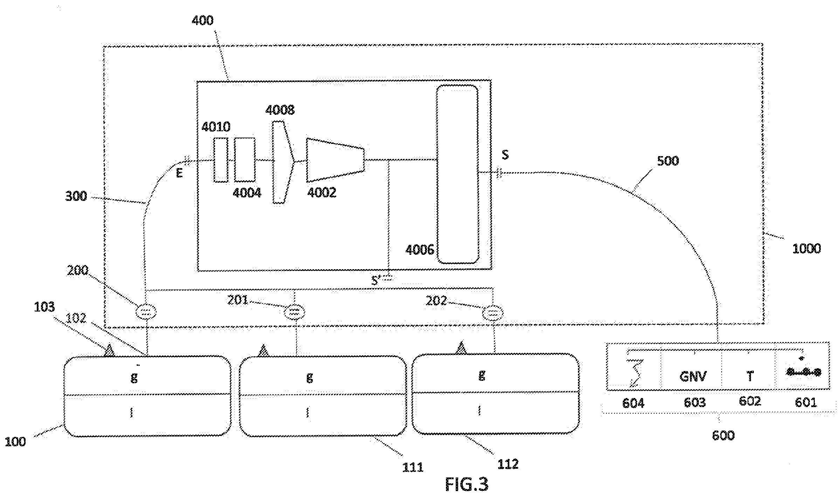

La figure 3 se différencie de la figure 2 par la présence d'un odoriseur 4008 entre le réservoir tampon 4004 et le compresseur 4002 dans le module 400 selon l'invention.

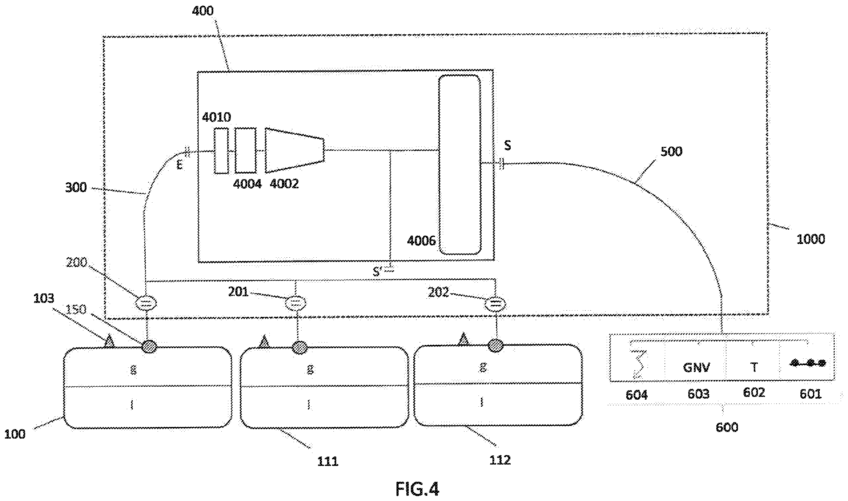

Les figures 4 à 6 représentent chacune un schéma de principe général d'un exemple de réalisation du système selon l'invention pouvant être utilisé en mode actif, mais aussi en mode passif : cela est rendu possible par le fait que, pour chacune de ces modes de réalisation, l'orifice d'évacuation (102) de chaque réservoir cryogénique 100, 111, 112 est systématiquement muni d'un clapet (150), de manière à récupérer la portion de phase gazeuse s'échappant de de la soupape placée au niveau de l'orifice (102).

Ainsi, la figure 4 représente une installation selon l'invention ne se différenciant de celle illustrée sur la figure 1 que par la présence d'un clapet 150 au niveau de l'orifice d'évacuation 102 des réservoirs cryogéniques 100, 111, 112.

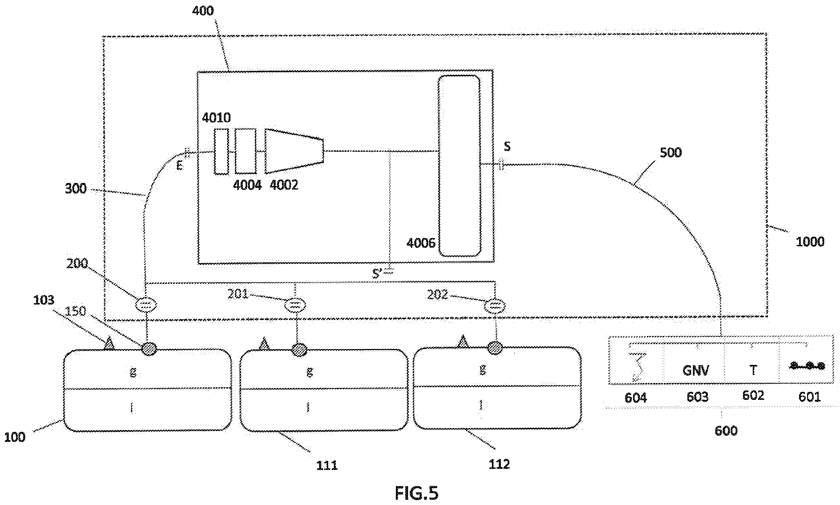

De même, la figure 5 représente une installation selon l'invention (avec sortie annexe S') ne se différenciant de celle illustrée sur la figure 2 que par la présence d'une d'un clapet 150 au niveau de l'orifice d'évacuation 102 des réservoirs cryogéniques 100, 111, 112.

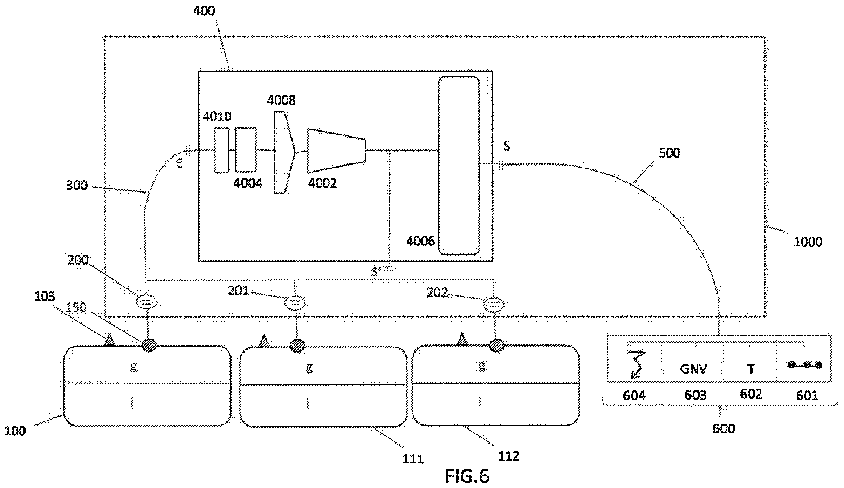

Enfin, la figure 6 représente une installation selon l'invention (avec odoriseur 4008) ne se différenciant de celle illustrée sur la figure 3 que par la présence d'un clapet 150 au niveau de l'orifice d'évacuation 102 des réservoirs cryogéniques 100, 111, 112.

## Revendications

1. Module (400) pour la dépressurisation, la collecte et le stockage d'une portion de couche gazeuse (g) provenant d'au moins un réservoir cryogénique (100, 111, 112) de véhicule, ledit réservoir cryogénique (100, 111, 112) comprenant au moins une soupape (103), ladite couche gazeuse étant la phase gazeuse d'une source gazeuse d'énergie, ledit réservoir (100) cryogénique contenant, outre ladite couche gazeuse (g), une couche liquide (l) qui est la phase liquide d'une source gazeuse d'énergie, ledit module (400) constituant un ensemble étanche pour lequel il n'y a aucune émission de gaz, fonctionnellement autoporteur et transportable comprenant :
- une entrée (E) destinée à être reliée, par un conduit amovible d'entrée (300), à un orifice (102) dudit réservoir (100, 111, 112) pour l'évacuation, hors dudit réservoir cryogénique, d'une portion de couche gazeuse,
- une sortie (S) destinée à être reliée, par un conduit amovible de sortie (500), à un système extérieur apte à utiliser ladite portion de couche gazeuse une fois évacuée,
- un réchauffeur (4010) raccordé à ladite entrée (E) du module (400),
- un réservoir tampon amortisseur (4004), raccordé au réchauffeur (4010), et aussi à,
- un compresseur (4002), raccordé audit réservoir tampon (4004), et aussi à
- un moyen de stockage (4006) raccordé audit compresseur (4002) et à ladite sortie (S) dudit module (400), ledit moyen de stockage (4006) permettant de stocker ladite portion de couche gazeuse évacuée.

2. Module (400) selon la revendication 1, dans lequel le moyen de stockage (4006) est apte à stocker ladite portion de couche gazeuse évacuée dudit compresseur (4002) à une pression égale ou supérieure à 200 bars.

3. Module (400) selon l'une quelconque des revendications 1 et 2, comprenant en outre un odoriseur (4008) situé entre le réservoir tampon (4004) et le compresseur (4002).

4. Module (400) selon l'une quelconque des revendications 1 à 3, comprenant en outre une sortie annexe (S') raccordée à la sortie dudit compresseur (4002).

5. Système pour la dépressurisation, la collecte et Z le stockage d'une portion de couche gazeuse provenant d'au moins un réservoir cryogénique de véhicule, ledit réservoir (100, 111, 112) comprenant au moins une soupape (103), ladite couche gazeuse étant la phase gazeuse d'une source gazeuse d'énergie, ledit réservoir cryogénique contenant, outre ladite couche gazeuse, une couche liquide qui est la phase liquide d'une source gazeuse d'énergie, ledit système étant **caractérisé en ce qu'**il comprend:
- ledit module (400) compact tel que défini selon l'une quelconque des revendications 1 à 4 ;
- un conduit amovible principal d'entrée (300) pour le transport de ladite portion de couche gazeuse provenant dudit réservoir cryogénique (100, 111, 112), entre au moins un orifice (102) dudit réservoir et l'entrée (E) dudit module (400),
- au moins un dispositif de connexion (200) pour connecter ledit orifice d'évacuation (102) du réservoir (100) avec ledit conduit amovible d'entrée (300), ledit dispositif de connexion (200) étant étanche et cryogénique, et
- un conduit amovible de sortie (500) pour le transport de ladite portion de couche gazeuse stockée dans ledit moyen de stockage (4008), entre la sortie (S) dudit module (400) et un système extérieur (600) apte à stocker et/ou utiliser ladite portion de couche gazeuse stockée.

6. Système selon la revendication 5, dans lequel ledit conduit amovible de sortie (500) est adapté pour être raccordée à un réseau de transport et/ou de distribution de gaz (601), ou à un système mixte de cogénération de chaleur et d'électricité (602), ou à un système de production d'électricité (604), ou à un système de distribution de gaz naturel véhicule GNV (603).

7. Système selon les revendications 5 ou 6, dans lequel ledit conduit d'entrée (300) et/ou ledit conduit de sortie (500) sont flexibles.

8. Système selon l'une quelconque des revendications 5 à 7, dans lequel ledit conduit amovible principal d'entrée (300) comporte un collecteur muni d'une pluralité de dispositifs de connexion (200, 201, 202), de manière à pouvoir être connecté à une pluralité de réservoirs (100, 111, 112) cryogéniques.

9. Système selon l'une quelconque des revendications 5 à 8, dans lequel ledit conduit amovible principal d'entrée (300) est un conduit pour la dépressurisation contrôlée d'un ou plusieurs réservoirs cryogéniques (100, 111, 112), ledit conduit (300) comprenant un moyen (310) pour maintenir ou réduire de la pression interne dudit réservoir cryogénique à une valeur égale ou inférieure à une valeur prédéterminée (100).

10. Système selon l'une quelconque des revendications 5 à 8, dans lequel ledit conduit amovible principal d'entrée (300) est connecté à un ou plusieurs réservoirs cryogéniques (100, 111, 112) dont l'orifice (102) d'évacuation est muni d'un clapet (150) .

11. Utilisation en mode actif dudit système tel que défini selon la revendication 9 pour maintenir ou réduire la pression interne dudit réservoir cryogénique (100, 111, 112) à une valeur inférieure à une valeur prédéterminée.

12. Utilisation en mode passif dudit système tel que défini selon la revendication 10, pour récupérer la portion de phase gazeuse s'échappant d'un clapet (150).

## Patentansprüche

1. Modul (400) zur Druckentlastung, Aufnahme und Speicherung eines Teils einer Gasschicht (g), die aus mindestens einem kryogenen Tank (100, 111, 112) stammt, wobei der kryogene Tank (100, 111, 112) mindestens ein Ventil (103) umfasst, wobei die Gasschicht die gasförmige Phase einer gasförmigen Energiequelle ist, wobei der kryogene Tank (100) zusätzlich zu der Gasschicht (g) eine flüssige Schicht (I) enthält, welche die flüssige Phase einer gasförmigen Energiequelle ist, wobei das Modul (400) eine abgedichtete Baugruppe darstellt, für die es keine Gasemission gibt, die funktionell selbsttragend und transportabel ist, umfassend:
- einen Einlass (E), der ausgelegt ist, um durch eine abnehmbare Einlassleitung (300) mit einer Öffnung (102) des Tanks (100, 111, 112) verbunden zu werden, um einen Teil der Gasschicht aus dem kryogenen Tank abzugeben,
- einen Auslass (S), der ausgelegt ist, um über eine abnehmbare Auslassleitung (500) mit einem externen System verbunden zu werden, das in der Lage ist, den Teil der Gasschicht nach der Abgabe zu nutzen,
- einen Vorwärmer (4010), der mit dem Einlass (E) des Moduls (400) verbunden ist,
- einen Dämpfer-Pufferspeicher (4004), der mit dem Vorwärmer (4010) verbunden ist, und auch mit
- einem Kompressor (4002), der mit dem Pufferspeicher (4004) verbunden ist, und auch mit
- einem Speichermittel (4006), das mit dem Kompressor (4002) und dem Auslass (S) des Moduls (400) verbunden ist, wobei das Speichermittel (4006) es ermöglicht, den Teil der abgegebenen Gasschicht zu speichern.

2. Modul (400) nach Anspruch 1, in dem das Speichermittel (4006) in der Lage ist, den aus dem Kompressor (4002) abgegebenen Teil der Gasschicht bei einem Druck gleich oder größer als 200 bar zu speichern.

3. Modul (400) nach einem der Ansprüche 1 und 2, ferner umfassend eine Odoriervorrichtung (4008), die zwischen dem Pufferspeicher (4004) und dem Kompressor (4002) angeordnet ist.

4. Modul (400) nach einem der Ansprüche 1 bis 3, ferner umfassend einen Zusatzausgang (S'), der mit dem Ausgang des Kompressors (4002) verbunden ist.

5. System zur Druckentlastung, Aufnahme und Speicherung eines Teils einer Gasschicht, die aus mindestens einem kryogenen Tank stammt, wobei der Tank (110, 111, 112) mindestens ein Ventil (103) umfasst, wobei die Gasschicht die gasförmige Phase einer gasförmigen Energiequelle ist, wobei der kryogene Tank zusätzlich zu der Gasschicht eine flüssige Schicht enthält, welche die flüssige Phase einer gasförmigen Energiequelle ist, wobei das System **dadurch gekennzeichnet ist, dass** es Folgendes umfasst:
- das kompakte Modul (400), wie nach einem der Ansprüche 1 bis 4 definiert;
- eine abnehmbare Haupteinlassleitung (300) zum Transportieren des Teils der Gasschicht, die aus dem kryogenen Tank (100, 111, 112) stammt, zwischen mindestens einer Öffnung (102) des Tanks und dem Einlass (E) des Moduls (400),
- mindestens eine Verbindungsvorrichtung (200) zum Verbinden der Abgabeöffnung (102) des Tanks (100) mit der abnehmbaren Einlassleitung (300), wobei die Verbindungsvorrichtung (200) abgedichtet und kryogen ist, und
- eine abnehmbare Auslassleitung (500) zum Transportieren des Teils der Gasschicht, die in dem Speichermittel (4008) gespeichert ist, zwischen dem Auslass (S) des Moduls (400) und einem externen System (600), das in der Lage ist, Gas zu speichern und/oder den Teil der gespeicherten Gasschicht zu nutzen.

6. System nach Anspruch 5, in dem die abnehmbare Auslassleitung (500) ausgelegt ist, um an ein Transport- und/oder Gasverteilungsnetz (601) oder an ein gemischtes System zur Kraft-Wärme-Kopplung (602) oder an ein Stromerzeugungssystem (604) oder an ein CNG-Fahrzeug-Erdgasverteilungssystem (603) angeschlossen zu werden.

7. System nach Anspruch 5 oder 6, wobei die Einlassleitung (300) und/oder die Auslassleitung (500) flexibel sind.

8. System nach einem der Ansprüche 5 bis 7, in dem die abnehmbare Haupteinlassleitung (300) einen Verteiler umfasst, der mit einer Vielzahl von Anschlussvorrichtungen (200, 201, 202) versehen ist, um an eine Vielzahl von kryogene Tanks (100, 111, 112) angeschlossen werden zu können.

9. System nach einem der Ansprüche 5 bis 8, in dem die abnehmbare Haupteinlassleitung (300) eine Leitung zur kontrollierten Druckentlastung eines oder mehrerer kryogener Tanks (100, 111, 112) ist, wobei die Leitung (300) Mittel (310) zum Beibehalten oder Reduzieren des Innendrucks des kryogenen Tanks auf einen Wert gleich oder kleiner als ein vorbestimmter Wert (100) umfasst.

10. System nach einem der Ansprüche 5 bis 8, in dem die abnehmbare Haupteinlassleitung (300) mit einem oder mehreren kryogenen Tanks (100, 111, 112) verbunden ist, deren Abgabeöffnung (102) mit einer Klappe (150) versehen ist.

11. Verwendung des nach Anspruch 9 definierten Systems im aktiven Modus, um den Innendruck des kryogenen Tanks (100, 111, 112) auf einem Wert beizubehalten oder zu reduzieren, der niedriger als ein vorbestimmter Wert ist.

12. Verwendung des nach Anspruch 10 definierten Systems im passiven Modus, um den Teil der Gasphase zurückzugewinnen, der aus einer Klappe (150) entweicht.

## Claims

1. A module (400) for depressurizing, collecting and storing a gaseous layer portion (g) from at least one vehicle cryogenic tank (100, 111, 112), said cryogenic tank (100, 111, 112) comprising at least one valve (103), said gaseous layer being the gaseous phase of a gaseous energy source, said cryogenic tank (100) containing, furthermore to said gaseous layer (g), a liquid layer (I) which is the liquid phase of a gaseous energy source, said module (400) consisting in a sealed assembly for which there is no emission of gas, functionally self-supporting and transportable, comprising:
- an intake (E) intended to be connected, by a removable intake line (300), to an orifice (102) of said tank (100, 111, 112) for evacuating a gaseous layer portion from said cryogenic tank,
- an outlet (S) intended to be connected, by a removable outlet line (500), to an external system capable of using said gaseous layer portion once evacuated,
- a heater (4010) connected to said intake (E) of the module (400),
- a damper buffer tank (4004), connected to the heater (4010), and also to
- a compressor (4002), connected to said buffer tank (4004), and also to
- a storage means (4006) connected to said compressor (4002) and to said outlet (S) of said module (400), said storage means (4006) enabling said evacuated gaseous layer portion to be stored.

2. The module (400) according to claim 1, wherein the storage means (4006) is capable of storing said evacuated gaseous layer portion from said compressor (4002) at a pressure equal to or greater than 200 bars.

3. The module (400) according to any one of claims 1 and 2, further comprising an odorizer (4008) located between the buffer tank (4004) and the compressor (4002).

4. The module (400) according to any one of claims 1 to 3, further comprising an auxiliary outlet (S') connected to said compressor outlet (4002).

5. A system for depressurizing, collecting and storing a gaseous layer portion from at least one vehicle cryogenic tank, said tank (100, 111, 112), comprising at least one valve (103), said gaseous layer being the gaseous phase of a gaseous energy source, said cryogenic tank containing, in addition to said gaseous layer, a liquid layer which is the liquid phase of a gaseous energy source, said system being **characterized in that** it comprises:
- said compact module (400) as defined according to any one of claims 1 to 4;
- a removable main intake line (300) for carrying said gaseous layer portion from said cryogenic tank (100, 111, 112), between at least one orifice (102) of said tank and the intake (E) of said module (400),
- at least one connection device (200) for connecting said evacuation orifice (102) of the tank (100) with said removable intake line (300), said connection device (200) being sealed and cryogenic, and
- a removable outlet line (500) for carrying said gaseous layer portion stored in said storage means (4008), between the outlet (S) of said module (400) and an external system (600) capable of storing and/or using said stored gaseous layer portion.

6. The system according to claim 5, wherein said removable outlet line (500) is capable of being connected to a gas transport and/or distribution network (601), or to a mixed heat and electricity cogeneration system (602), or to an electricity production system (604), or to a vehicle natural gas (VNG) distribution system (603).

7. The system according to claims 5 or 6, wherein said intake line (300) and/or said outlet line (500) are flexible.

8. The system according to any one of claims 5 to 7, wherein said removable main intake line (300) comprises a manifold fitted with a plurality of connection devices (200, 201, 202) so as to be able to be connected to a plurality of cryogenic tanks (100, 111, 112).

9. The system according to any one of claims 5 to 8, wherein said removable main intake line (300) is a line for the controlled depressurizing of one or more cryogenic tanks (100, 111, 112), said line (300) comprising a means (310) for maintaining or reducing the internal pressure of said cryogenic tank to a value equal to or less than a predetermined value (100).

10. The system according to any one of claims 5 to 8, wherein said removable main intake line (300) is connected to one or several cryogenic tanks (100, 111, 112) the evacuation orifice (102) whereof is equipped with a flap valve (150).

11. The use in active mode of said system as defined according to claim 9 for maintaining or reducing the internal pressure of said cryogenic tank (100, 111, 112) to a value less than a predetermined value.

12. The use in passive mode of said system as defined according to claim 10, for recovering the gaseous phase portion escaping from a flap valve (150).
